# EUROPÄISCHE PATENTANMELDUNG

(11) **EP 2 400 264 A2**
(43) Veröffentlichungstag der Anmeldung: **28.12.2011**
(21) Anmeldenummer: 11167203.6
(22) Anmeldetag: 24.05.2011
(51) Int. Cl.: G01C 15/00

(54) **Verfahren und Laserempfänger zur akustischen Anzeige eines Laserstrahls**

(30) Priorität: 28.06.2010 DE 102010030597
(71) Anmelder: HILTI Aktiengesellschaft, 9494 Schaan (LI)
(72) Erfinder: Winter, Andreas, 6800 Feldkirch (AT)

(57) **Zusammenfassung**

Laserempfänger (1) zur akustischen Anzeige eines Laserstrahls mit einem Gehäuse (4), einer Detektoreinrichtung (6), die eine Ist-Position (2) des Laserstrahls ermittelt, einer Auswerteeinrichtung (8), die eine Differenz der Ist-Position (2) zu einer Soll-Position (3) bestimmt, und einer akustischen Anzeigeeinrichtung (7), die über ein akustisches Signal anzeigt, ob die Ist-Position (2) des Laserstrahls oberhalb, unterhalb oder auf der Soll-Position (3) liegt, wobei eine Steuereinrichtung (9) vorgesehen ist, die in Abhängigkeit von der Differenz der Ist-Position (2) zur Soll-Position (3) ein Tastsignal zur Modulation eines Grundsignals erstellt und an die akustische Anzeigeeinrichtung (7) übermittelt.

## Beschreibung

Die vorliegende Erfindung betrifft ein Verfahren zur akustischen Anzeige eines Laserstrahls gemäß dem Oberbegriff des Anspruchs 1 sowie einen Laserempfänger zur akustischen Anzeige eines Laserstrahls gemäß dem Oberbegriff des Anspruchs 5.

Um Nivellier- oder Markierungsarbeiten im Innen- und Außenbereich durchzuführen, sind Lasergeräte bekannt, die punkt- und/oder linienförmige Laserstrahlen erzeugen. Die Laserstrahlen dienen dazu, Referenzpunkte oder Referenzlinien auf Wänden, Decken und Böden anzuzeigen. Bei diesen Lasergeräten wird zwischen Rotationslasern, die einen linienförmigen Laserstrahl durch Rotation einer Laserstrahlquelle oder einer strahlumlenkenden Optik um eine Rotationsachse erzeugen, und Punkt- und/oder Linienlasern, die punkt- und/oder linienförmige Laserstrahlen mittels strahlformender Optiken, wie Zylinderlinsen und Prismen, erzeugen, unterschieden.

Um einen Laserstrahl in einer bestimmten Höhe auf eine Wand zu projizieren, ist es erforderlich, das Lasergerät in der entsprechenden Höhe anzuordnen. Bekannt sind Haltevorrichtungen, mit denen Lasergeräte an einer Wand, einer Wand- oder Deckenschiene, an einem Rohr und/oder einer magnetischen Konstruktion befestigt werden können, sowie Haltevorrichtungen in Form von Stativen, die freistehend auf einen Untergrund positioniert werden. Die Höheneinstellung der Haltevorrichtungen erfolgt manuell mit Hilfe einer Kurbel oder motorisch.

Bei Lasergeräten, die ohne Schutzmassnahmen, wie Schutzbrillen, eingesetzt werden dürfen, ist die maximal erlaubte Laserleistung begrenzt. Die erlaubten Laserleistungen führen bei Nivellier- und Markierungsarbeiten im Außenbereich häufig zu nicht oder schlecht sichtbaren Laserstrahlen. Um die Sichtbarkeit der Laserstrahlen zu verbessern, werden Laserempfänger in den Laserstrahl gehalten. Laserempfänger werden als Handgerät von einem Bediener direkt in den Laserstrahl gehalten oder an einer Teleskop- oder Nivellierstange befestigt. Bekannte Laserempfänger umfassen eine Detektoreinrichtung, eine Auswerteeinrichtung sowie optische und akustische Anzeigeeinrichtungen.

Zur Höheneinstellung einer Haltevorrichtung auf eine gewünschte Höhe, die als Soll-Position bezeichnet wird, wird ein Laserstrahl auf eine Detektoreinrichtung des Laserempfängers gerichtet. Mit Hilfe einer Auswerteeinrichtung wird die Differenz der Ist-Position des Laserstrahls zur Soll-Position berechnet und vom Laserempfänger optisch und/oder akustisch angezeigt. Der Bediener steuert die Haltevorrichtung mittels einer Bedienungseinrichtung bis der Laserstrahl in der Soll-Position angeordnet ist.

Die optische Anzeigeeinrichtung umfasst ein LCD-Display, auf dem die Höhendifferenz des Laserstrahls zur Soll-Position in Form grafischer Symbole über Abstandspfeile und einen Mittelbalken und/oder als numerischer Wert dargestellt wird. Die Abstandspfeile umfassen mehrere Stufen ab- bzw. zunehmender Pfeile zur Anzeige der Höhendifferenz des Laserstrahls zur Soll-Position. Die Abstandspfeile nehmen zu, wenn sich die Höhendifferenz des Laserstrahls zur Soll-Position vergrößert, und sie nehmen ab, wenn sich die Höhendifferenz verkleinert.

Die akustische Anzeigeeinrichtung umfasst einen Lautsprecher, der drei verschiedene akustische Signale aussendet. Liegt der Laserstrahl auf der Soll-Position ertönt ein Dauerton mit einer konstanten Tonfrequenz. Wenn der Laserstrahl oberhalb der Soll-Position von der Detektoreinrichtung erfasst wird, ertönt ein akustisches Signal mit der Tonfrequenz, das mit einem Tastsignal mit einer ersten Tastfrequenz f_{T1} moduliert ist. Wird der Laserstrahl unterhalb der Soll-Position von der Detektoreinrichtung erfasst, ertönt ein akustisches Signal mit der Tonfrequenz, das mit einem Tastsignal mit einer zweiten Tastfrequenz f_{T2} moduliert ist. Die zweite Tastfrequenz f_{T2} ist niedriger als die erste Tastfrequenz f_{T1}.

Die bekannten Laserempfänger weisen den Nachteil auf, dass die Abstandspfeile, die dem Bediener optisch anzeigen, wie weit er den Laserempfänger in welche Richtung bewegen muss, unter einigen Umgebungsbedingungen nur schlecht sichtbar sind und die akustische Anzeige nur drei Zustände unterscheidet, unterhalb der Soll-Position, auf der Soll-Position und oberhalb der Soll-Position. Aus den akustischen Signalen erhält der Bediener keine Information darüber, wie weit die Ist-Position des Laserstrahls von der Soll-Position entfernt ist.

Wünschenswert wäre es, ein Verfahren und einen Laserempfänger zur akustischen Anzeige eines Laserstrahls hinsichtlich der oben erläuterten Nachteile bei eingeschränkter Sichtbarkeit zu verbessern. Die Aufgabe der vorliegenden Erfindung besteht darin, ein Verfahren zur akustischen Anzeige eines Laserstrahls bereitzustellen, das den Bediener bei eingeschränkter Sichtbarkeit bei der Höheneinstellung unterstützt. Aufgabe der Erfindung ist es auch, einen entsprechenden Laserempfänger zur akustischen Anzeige eines Laserstrahls anzugeben.

Diese Aufgabe wird bei dem eingangs genannten Verfahren zur akustischen Anzeige eines Laserstrahls erfindungsgemäß durch die Merkmale des unabhängigen Anspruchs 1 gelöst.

Erfindungsgemäß ist bei einem Verfahren zur akustischen Anzeige eines Laserstrahls vorgesehen, dass ein Grundsignal mit einem Tastsignal moduliert wird, wobei das Tastsignal in Abhängigkeit von der Differenz der Ist-Position zur Soll-Position verändert wird. Dadurch, dass das Tastsignal abhängig von der Differenz der Ist-Position zur Soll-Position verändert wird, erhält der Bediener akustischen Anweisungen, wie der Laserempfänger zu verschieben ist.

In einer bevorzugten Ausführung werden ein Tastverhältnis und/oder eine Tastfrequenz des Tastsignals in Abhängigkeit von der Differenz der Ist-Position zur Soll-Position verändert. Das Tastverhältnis und die Tastfrequenz eignen sich zur akustischen Anzeige, da Änderungen dieser Eigenschaften für den Bediener gut wahrnehmbar sind. Die Wahrnehmbarkeit kann dadurch erhöht werden, dass gleichzeitig mehrere Eigenschaften des Tastsignals in Abhängigkeit von der Differenz verändert werden.

Das Tastverhältnis und/oder die Tastfrequenz des Tastsignals werden besonders bevorzugt kontinuierlich oder in mehreren diskreten Stufen in Abhängigkeit von der Differenz der Ist-Position zur Soll-Position verändert. Vorteil einer kontinuierlichen Veränderung des Tastsignals ist, dass der Bediener sehr genaue akustische Anweisungen erhält, wie der Laserempfänger zu verstellen ist. Eine akustische Anzeige in mehreren diskreten Stufen bietet sich an, wenn neben der akustischen Anzeige eine optische Anzeige erfolgt, so dass die akustische und optische Anzeige aufeinander abgestimmt sind.

Das Tastverhältnis des Tastsignals wird besonders bevorzugt mit zunehmender Differenz der Ist-Position zur Soll-Position verkleinert und mit abnehmender Differenz der Ist-Position zur Soll-Position vergrößert. Dabei kann die Änderung beispielsweise logarithmisch oder linear abhängig von der Differenz erfolgen.

Erfindungsgemäß ist bei einem Laserempfänger zur akustischen Anzeige eines Laserstrahls eine Steuereinrichtung vorgesehen, die in Abhängigkeit von der Differenz der Ist-Position zur Soll-Position ein Tastsignal zur Modulation eines Grundsignals erstellt und an die akustische Anzeigeeinrichtung übermittelt. Durch die Abhängigkeit des Tastsignals von der Differenz der Ist-Position zur Soll-Position erhält der Bediener akustischen Anweisungen, wie der Laserempfänger zu verschieben ist. Die Änderungen der akustischen Signale zeigen dem Bediener in welche Richtung der Laserempfänger oder das Lasergerät zu bewegen ist.

Bevorzugt ist die akustische Anzeigeeinrichtung im Gehäuse und/oder außerhalb des Gehäuses angeordnet. Vorteil einer akustischen Anzeigeeinrichtung, die außerhalb des Gehäuses angeordnet ist, ist, dass die akustische Anzeige an dem Ort erfolgt, an dem sie vom Bediener gut wahrnehmbar ist. Außerdem kann die Leistungsfähigkeit der akustischen Anzeigeeinrichtung an die örtlichen Gegebenheiten angepasst werden.

In einer bevorzugten Ausführung weist die akustische Anzeigeeinrichtung einen elektrischen Signalerzeuger, einen ersten elektro-akustischen Schallwandler und einen zweiten elektro-akustischen Schallwandler auf, wobei der Signalerzeuger und der erste Schallwandler im Gehäuse angeordnet sind und der zweite Schallwandler über eine Kommunikationsverbindung mit dem Signalerzeuger verbindbar ist. Der Vorteil eines zweiten Schallwandlers, der über eine kabelgebundene oder kabellose Kommunikationsverbindung mit dem Signalerzeuger verbindbar ist, besteht darin, dass die akustische Anzeige an einen entfernten Ort übertragen werden kann. Über einen Kopfhörer kann die akustische Anzeige auch bei sehr lauten Umgebungsbedingungen gut wahrgenommen werden. Außerdem besteht die Möglichkeit, dass mehrere Bediener die akustische Anzeige an verschiedenen Orten gut wahrnehmen können.

In einer alternativen bevorzugten Ausführung sind die akustische Anzeigeeinrichtung im Gehäuse und eine weitere akustische Anzeigeeinrichtung außerhalb des Gehäuses vorgesehen, wobei die weitere akustische Anzeigeeinrichtung über eine Kommunikationsverbindung mit einem Mikrocontroller des Laserempfängers verbindbar ist.

Bevorzugt weist der Laserempfänger einen Anschluss zum Anschluss eines Schallwandlers oder einer akustischen Anzeigeeinrichtung über eine kabellose oder kabelgebundene Kommunikationsverbindung auf. Über den externen Anschluss können akustische Anzeigeeinrichtungen, wie bspw. Lautsprecher oder ein Kopfhörer, an den Laserempfänger angeschlossen werden. Der Laserempfänger kann kompakt ausgebildet werden, wenn leistungsstarke und damit in der Regel große akustische Anzeigeeinrichtungen über den externen Anschluss verbunden werden können.

Bevorzugt weist der Laserempfänger eine Schalteinrichtung zum Umschalten der akustischen Anzeige zwischen einer ersten akustischen Anzeigeeinrichtung, einer zweiten akustischen Anzeigeeinrichtung oder einer ersten und zweiten akustischen Anzeigeeinrichtung bzw. zwischen einem ersten Schallwandler, einem zweiten Schallwandler oder einem ersten und zweiten Schallwandler auf. Die Schalteinrichtung bietet die Möglichkeit, die akustische Anzeige an die Umgebungsbedingungen anzupassen. Das Ausschalten von Schallwandlern, Signalerzeugern oder akustischen Anzeigeeinrichtungen, die nicht benötigt werden, reduziert die Lärmbelästigung und den Stromverbrauch des Laserempfängers.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung.

Es zeigen:
Fig. 1 eine erste Ausführungsform eines erfindungsgemässen Laserempfängers zur akustischen Anzeige der Differenz einer Ist-Position eines Laserstrahls zu einer Soll-Position;
Fig. 2 eine zweite Ausführungsform eines erfindungsgemässen Laserempfängers zur akustischen und optischen Anzeige der Differenz der Ist- und Soll-Position; und
Fign. 3a-e fünf verschiedene akustische Signale bei einer stufenweise Anzeige des Laserstrahls.

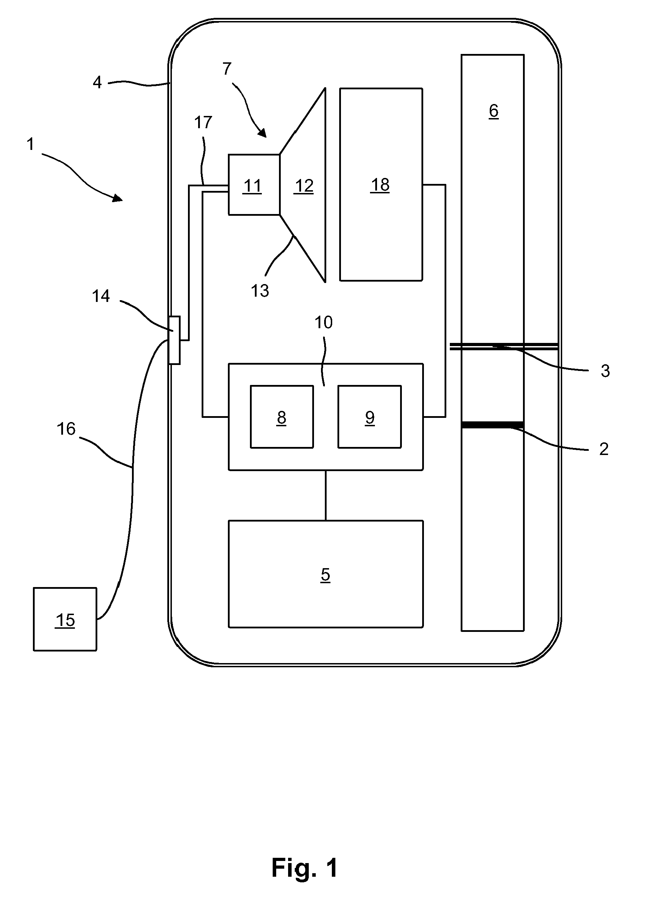

**Fig. 1** zeigt einen erfindungsgemässen Laserempfänger **1** zur akustischen Anzeige der Differenz zwischen einer Ist-Position **2** eines Laserstrahls und einer Soll-Position **3.** Der Laserempfänger 1 besteht aus einem Gehäuse **4,** einer Bedienungseinrichtung **5** zur Bedienung des Laserempfängers 1, einer Detektoreinrichtung **6** zur Erfassung der Ist-Position 2 des Laserstrahls und einer akustischen Anzeigeeinrichtung **7.** Die Bedienungseinrichtung 5, die Detektoreinrichtung 6 und die akustische Anzeigeeinrichtung 7 sind in das Gehäuse 4 des Laserempfängers 1 integriert.

Die Detektoreinrichtung 6 und die Anzeigeeinrichtung 7 sind mit einer Auswerteeinrichtung **8** verbunden, die die Differenz zwischen der Ist-Position 2 des Laserstrahls und der Soll-Position 3 bestimmt. Die Auswerteeinrichtung 8 ist zusammen mit einer Steuereinrichtung **9** zur Steuerung des Laserempfängers 1 in einen Mikrocontroller **10** integriert. Im Mikrocontroller 10 ist die Soll-Position 3 hinterlegt. Ziel ist es, den Laserempfänger 1 so zu verschieben, das der Laserstrahl in der Soll-Position 3 auf die Detektoreinrichtung 6 auftrifft.

Die akustische Anzeigeeinrichtung 7 weist einen elektrischen Signalerzeuger **11,** der mit dem Mikrocontroller 10 verbunden ist, und einen elektro-akustischen Schallwandler **12** auf. Der Signalerzeuger 11 erzeugt ein der Differenz entsprechendes elektrisches Signal, das vom Schallwandler 12 in ein akustisches Signal umgewandelt wird. Der elektrische Signalerzeuger 11 und der elektro-akustische Schallwandler 12 sind als Lautsprecher **13** ausgebildet und im Gehäuse 4 des Laserempfängers 1 angeordnet. Der Lautsprecher 13 ist ein- und ausschaltbar ausgebildet und gibt die Differenz der Ist- und Soll-Position als akustisches Signal an. Die Lautstärke des Lautsprechers 13 ist zwischen mehreren Stufen schaltbar, beispielsweise zwischen laut, normal, leise und aus.

Der erfindungsgemäße Laserempfänger 1 weist einen Anschluss **14** für einen zweiten elektro-akustischen Schallwandler **15** auf. Der zweite elektro-akustische Schallwandler 15 ist außerhalb des Gehäuses 4 des Laserempfängers 1 angeordnet und über eine Kommunikationsverbindung **16** mit dem Laserempfänger 1 verbindbar. Der Anschluss 14 ist über eine Verbindung **17** mit dem elektrischen Signalerzeuger 11 verbunden. Die Kommunikationsverbindung 16 ist als kabelgebundene Kommunikationsverbindung oder als kabellose Kommunikationsverbindung, beispielsweise in Form einer Funk- oder einer Infrarotverbindung, ausgebildet. Der zweite elektro-akustische Schallwandler 15 überträgt die akustischen Signale an einen entfernten Ort, so dass die akustischen Signale dort gut wahrnehmbar sind. Als Schallwandler 15 eignen sich beispielsweise Kopfhörer oder ein weiterer Lautsprecher.

Die akustische Anzeigeeinrichtung 7 kann alternativ zu der in Fig. 1 gezeigten gehäuseinternen Anordnung auch außerhalb des Gehäuses 4 angeordnet sein. In diesem Fall ist die akustische Anzeigeeinrichtung 7 über die Kommunikationsverbindung 16 mit dem Anschluss 14 verbunden. Der Anschluss 14 ist seinerseits mit dem Mikrocontroller 10 verbunden.

Der Laserempfänger 1 weist ein optisches Display **18** auf, auf dem der Bediener Informationen über den Laserempfänger 1 ablesen kann. Dazu gehören beispielsweise ein Ladezustand des Laserempfängers 1 und die eingestellte Lautstärke des Lautsprechers 15. Das optische Display 18 dient nicht zur optischen Anzeige des Laserstrahls und der Differenz der Ist-Position 2 des Laserstrahls zur Soll-Position 3.

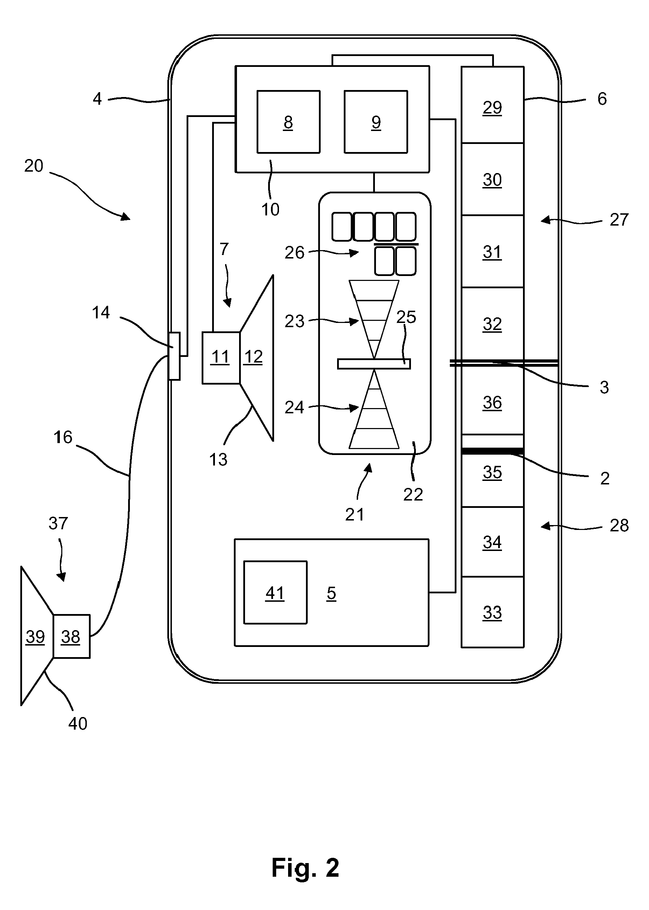

**Fig. 2** zeigt eine zweite Ausführungsform eines erfindungsgemässen Laserempfängers **20** zur akustischen und optischen Anzeige der Differenz der Ist-Position 2 und der Soll-Position 3. Der Laserempfänger 20 unterscheidet sich vom Laserempfänger 1 der Fig. 1 dadurch, dass neben der akustischen Anzeige auch eine optische Anzeige der Differenz erfolgt. Dazu weist der Laserempfänger neben der akustischen Anzeigeeinrichtung 7 zur optischen Anzeige der Differenz eine optische Anzeigeeinrichtung **21** auf, die in das Gehäuse 4 des Laserempfängers 1 integriert ist.

Die Differenz der Ist-Position 2 des Laserstrahls zur Soll-Position 3 wird dem Bediener akustisch und optisch in diskreten Stufen angezeigt. Die optische Anzeigeeinrichtung 21 umfasst ein LCD-Display **22,** das die Differenz in Form grafischer Symbole über einen oberen und unteren Abstandspfeil **23, 24** und einen Mittelbalken **25** sowie als numerischen Wert **26** in einer ausgewählten Maßeinheit dargestellt. Der obere Abstandspfeil 23 zeigt an, dass der Laserstrahl oberhalb der Soll-Position 3 liegt, und der untere Abstandspfeil 24, dass der Laserstrahl unterhalb der Soll-Position 3 liegt. Der Mittelbalken 25 leuchtet auf, wenn sich der Laserstrahl in der Soll-Position 3 befindet.

Die Abstandspfeile 23, 24 weisen jeweils vier Stufen auf, die äquidistant ausgebildet sind. Jede Stufe entspricht einem Bereich der Differenzen. Die Detektoreinrichtung 6 ist in eine obere Detektoreinrichtung **27** und eine untere Detektoreinrichtung **28** unterteilt. Die obere Detektoreinrichtung 27 umfasst im Ausführungsbeispiel der Fig. 2 vier obere Detektorfelder **29, 30, 31, 32** und die untere Detektoreinrichtung 28 vier untere Detektorfelder **33, 34, 35, 36.** Die Stufen des oberen Abstandspfeils 23 entsprechen den oberen Detektorfeldern 29-32 und die Stufen des unteren Abstandspfeils 24 den unteren Detektorfeldern 33-36.

Der Bediener erhält neben der optischen Anzeige der Differenzen über die optische Anzeigeeinrichtung 21 akustische Anweisungen zum Verstellen des Laserempfängers 1 über die akustische Anzeigeeinrichtung 7. Die akustische Anzeige der Differenzen der Ist-Position 2 des Laserstrahls zur Soll-Position 3 erfolgt über akustische Signale. Die Differenzen werden durch Änderungen von akustischen Eigenschaften angezeigt. Als Eigenschaften eignen sich das Tastverhältnis, die Lautstärke und die Tonfrequenz, da Änderungen dieser Eigenschaften für den Bediener gut wahrnehmbar sind. Die Wahrnehmbarkeit kann dadurch erhöht werden, dass gleichzeitig mehrere Eigenschaften des akustischen Signals in Abhängigkeit von der Differenz verändert werden.

Der Laserempfänger 20 weist neben der akustischen Anzeigeeinrichtung 7, die im Gehäuse 4 angeordnet ist, eine weitere akustische Anzeigeeinrichtung **37** bestehend aus einem elektrischen Signalerzeuger **38** und einem elektro-akustischen Schallwandler **39** auf. Der elektrische Signalerzeuger 38 und der elektro-akustische Schallwandler 39 sind als Lautsprecher **40** ausgebildet und außerhalb des Gehäuses 4 des Laserempfängers 20 angeordnet. Der Lautsprecher 40 ist über die Kommunikationsverbindung 16 mit dem Anschluss 14 verbunden. Mittels einer Schalteinrichtung **41** ist die akustische Anzeige der Höhendifferenz des Laserstrahls zwischen der ersten und/oder zweiten Anzeigeeinrichtung 7, 37 umschaltbar ausgebildet.

Die akustische Anzeige der Ist-Position 2 relativ zur Soll-Position 3 erfolgt über ein akustisches Signal, das durch Modulation eines Grundsignals mit einem Tastsignal erzeugt wird. Als Grundsignal wird beispielsweise ein rechteckförmiges Signal mit einer Frequenz im Frequenzbereich zwischen 1 kHz und 5 kHz verwendet. Das Tastsignal ist durch eine Tastfrequenz, die als mathematischer Kehrwert einer Periodendauer T definiert ist, und ein Tastverhältnis, das als Verhältnis von Pulsdauer τ zu Periodendauer T definiert ist, charakterisiert. Liegt der Laserstrahl außerhalb der Detektoreinrichtung 6 ertönt kein akustisches Signal. Ein akustisches Signal ertönt nur, wenn der Laserstrahl auf die Detektoreinrichtung 6 aufgetroffen ist.

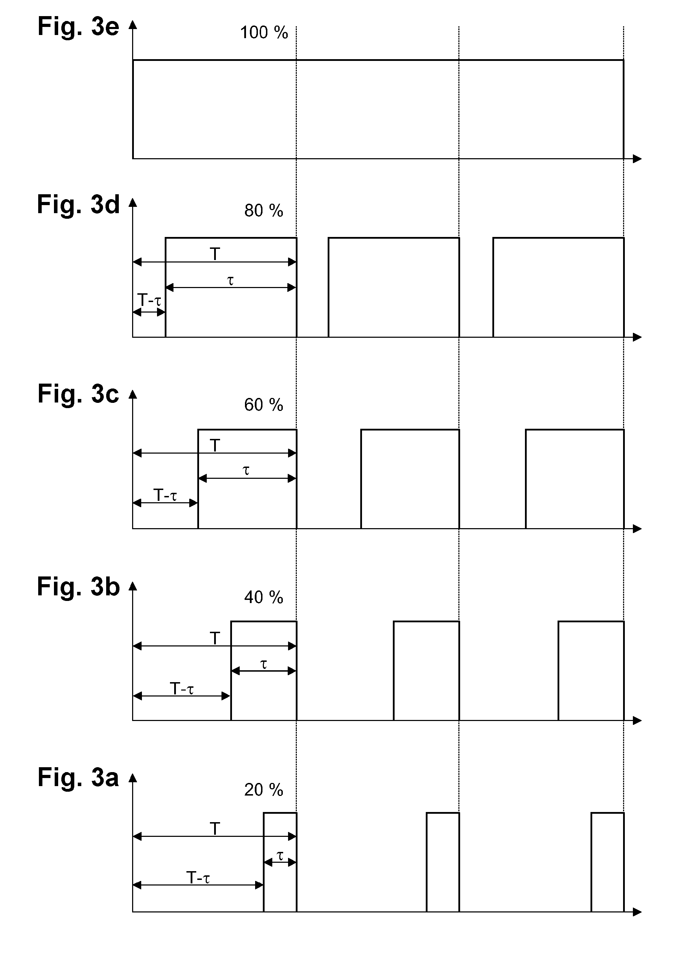

**Fign. 3a-3e** zeigen fünf akustische Signale, die den Bediener bei der Höheneinstellung des Laserempfängers 1 unterstützen. Das Grundsignal ist als rechteckförmiges Signal mit einer Frequenz im Frequenzbereich zwischen 1 kHz und 5 kHz ausgebildet, das mit einem rechteckförmigen Tastsignal moduliert ist. Das Tastsignal kann alternativ dreieckförmig, sinusförmig oder in einer sonstigen Form ausgebildet sein. Die Unterscheidung, ob der Laserstrahl oberhalb oder unterhalb der Soll-Position 3 auf die Detektoreinrichtung 6 auftrifft, wird dem Bediener beispielsweise durch unterschiedliche Grundsignale, die sich in der Tonfrequenz oder der Signalform unterscheiden, oder durch unterschiedliche Tastfrequenzen der Tastsignale angezeigt.

Das akustische Signal der Fig. 3a ertönt, wenn die Ist-Position 2 des Laserstrahls im unteren Detektorfeld 33 liegt. Das Tastverhältnis τ/T des Tastsignals beträgt 20 %, d.h. die Pulspause T-τ ist viermal solang wie die Pulsdauer τ. Die kurze Pulsdauer τ und die lange Pulspause T-τ signalisieren dem Bediener, dass die Differenz der Ist-Position 2 zur Soll-Position 3 groß ist.

Wird der Laserempfänger 1 vom Bediener entsprechend der akustischen Anweisung verschoben, trifft der Laserstrahl auf das untere Detektorfeld 34 und das akustische Signal der Fig. 3b ertönt. Das Tastverhältnis τ/T des Tastsignals beträgt 40 %. Die gegenüber dem akustischen Signal der Fig. 3a längere Pulsdauer τ und die kürzere Pulspause T-τ signalisieren dem Bediener, dass die Differenz der Ist-Position 2 zur Soll-Position 3 kleiner geworden ist, der Laserempfänger 1 aber noch weiter verschoben werden muss.

Verschiebt der Bediener den Laserempfänger 1 entsprechend der akustischen Anweisung, trifft der Laserstrahl zunächst auf das untere Detektorfeld 35, das durch das akustische Signal der Fig. 3c, bei dem das Tastsignal ein Tastverhältnis τ/T von 60 % aufweist, akustisch angezeigt wird. Bei weiterem Verschieben des Laserempfängers 1 trifft der Laserstrahl auf das untere Detektorfeld 36 und das akustische Signal der Fig. 3d, bei dem das Tastsignal ein Tastverhältnis τ/T von 80 % aufweist, ertönt. Die gegenüber dem akustischen Signal der Fig. 3c längere Pulsdauer τ rund die kürzere Pulspause T-τ signalisieren dem Bediener, dass die Differenz noch kleiner geworden ist, der Laserempfänger 1 aber noch verschoben werden muss.

Wird der Laserempfänger 1 vom Bediener entsprechend weiter verschoben, trifft der Laserstrahl in den Bereich zwischen der oberen und unteren Detektoreinrichtung 27, 28 und das akustische Signal der Fig. 3e ertönt. Das Tastverhältnis τ/T beträgt 100 %, d.h. der Bediener hört einen Dauerton ohne Pulspause. Der Dauerton zeigt dem Bediener an, dass der Laserstrahl in der Soll-Position 3 auf die Detektoreinrichtung 6 auftrifft und richtig ausgerichtet ist. Um dem Bediener das Erreichen der Soll-Position 3 akustisch noch deutlicher anzuzeigen, kann sich das Grundsignal der Fig. 3e von den Grundsignalen der Fign. 3a-3d beispielsweise durch die Tonfrequenz unterscheiden.

Die akustische Anzeige der Differenz der Ist-Position 2 zur Soll-Position 3 erfolgt in der Ausführung der Fig. 2 wie die optische Anzeige in mehreren diskreten Stufen. Alternativ kann die akustische Anzeige auch kontinuierlich in Abhängigkeit von der Differenz erfolgen. Dazu wird beispielsweise das Tastverhältnis des Tastsignals linear oder logarithmisch mit der Differenz der Ist-Position 2 zur Soll-Position 3 verändert.

## Patentansprüche

1. Verfahren zur akustischen Anzeige eines Laserstrahls, bei dem der Laserstrahl in einer Ist-Position (2) auf eine Detektoreinrichtung (6) ausgesandt wird, die Differenz der Ist-Position (2) zu einer Soll-Position (3) über eine Auswerteeinrichtung (8) bestimmt wird und mit einer akustischen Anzeigeeinrichtung (7) angezeigt wird, ob die Ist-Position (2) des Laserstrahls oberhalb, unterhalb oder auf der Soll-Position (3) liegt,
**dadurch gekennzeichnet, dass** ein Grundsignal mit einem Tastsignal moduliert wird, wobei das Tastsignal in Abhängigkeit von der Differenz der Ist-Position (2) zur Soll-Position (3) verändert wird.

2. Verfahren nach Anspruch 1, **dadurch gekennzeichnet, dass** das Tastverhältnis und/oder die Tastfrequenz des Tastsignals in Abhängigkeit von der Differenz der Ist-Position (2) zur Soll-Position (3) verändert werden.

3. Verfahren nach Anspruch 2, **dadurch gekennzeichnet, dass** das Tastverhältnis und/oder die Tastfrequenz des Tastsignals kontinuierlich oder in mehreren diskreten Stufen in Abhängigkeit von der Differenz der Ist-Position (2) zur Soll-Position (3) verändert werden.

4. Verfahren nach einem der Ansprüche 2 bis 3, **dadurch gekennzeichnet, dass** das Tastverhältnis des Tastsignals mit zunehmender Differenz der Ist-Position (2) zur Soll-Position (3) verkleinert und mit abnehmender Differenz der Ist-Position (2) zur Soll-Position (3) vergrößert wird.

5. Laserempfänger (1; 20) zur akustischen Anzeige eines Laserstrahls mit einem Gehäuse (4), einer Detektoreinrichtung (6), die eine Ist-Position (2) des Laserstrahls ermittelt, einer Auswerteeinrichtung (8), die eine Differenz der Ist-Position (2) zu einer Soll-Position (3) bestimmt, und einer akustischen Anzeigeeinrichtung (7), die über ein akustisches Signal anzeigt, ob die Ist-Position (2) des Laserstrahls oberhalb, unterhalb oder auf der Soll-Position (3) liegt,
**dadurch gekennzeichnet, dass** eine Steuereinrichtung (9) vorgesehen ist, die in Abhängigkeit von der Differenz der Ist-Position (2) zur Soll-Position (3) ein Tastsignal zur Modulation eines Grundsignals erstellt und an die akustische Anzeigeeinrichtung (7) übermittelt.

6. Laserempfänger nach Anspruch 5, **dadurch gekennzeichnet, dass** die akustische Anzeigeeinrichtung (7) im Gehäuse (4) und/oder außerhalb des Gehäuses (4) angeordnet ist.

7. Laserempfänger nach einem der Ansprüche 5 bis 6, **dadurch gekennzeichnet, dass** die akustische Anzeigeeinrichtung (7) einen elektrischen Signalerzeuger (11), einen ersten elektro-akustischen Schallwandler (12) und einen zweiten elektro-akustischen Schallwandler (15) aufweist, wobei der Signalerzeuger (11) und der erste Schallwandler (12) im Gehäuse (4) angeordnet sind und der zweite Schallwandler (15) über eine Kommunikationsverbindung (16) mit dem Signalerzeuger (11) verbindbar ist.

8. Laserempfänger nach einem der Ansprüche 5 bis 6, **dadurch gekennzeichnet, dass** die akustische Anzeigeeinrichtung (7) im Gehäuse (4) und eine weitere akustische Anzeigeeinrichtung (37) außerhalb des Gehäuses (4) vorgesehen sind, wobei die weitere akustische Anzeigeeinrichtung (37) über eine Kommunikationsverbindung (16) mit einem Mikrocontroller (10) des Laserempfängers (20) verbindbar ist.

9. Laserempfänger nach einem der Ansprüche 5 bis 8, **dadurch gekennzeichnet, dass** der Laserempfänger (1; 20) einen Anschluss (14) zum Anschluss eines Schallwandlers (15) oder einer akustischen Anzeigeeinrichtung (37) aufweist.

10. Laserempfänger nach einem der Ansprüche 5 bis 9, **dadurch gekennzeichnet, dass** der Laserempfänger (20) eine Schalteinrichtung (41) zum Umschalten der akustischen Anzeige zwischen einer ersten akustischen Anzeigeeinrichtung (7), einer zweiten akustischen Anzeigeeinrichtung (37) oder einer ersten und zweiten akustischen Anzeigeeinrichtung (7, 37) bzw. zwischen einem ersten Schallwandler (12), einem zweiten Schallwandler (39) oder einem ersten und zweiten Schallwandler (12, 39) aufweist.
